Europäisches Patentamt

European Patent Office

Office européen des brevets

(11) Veröffentlichungsnummer: **0 204 329**

**A2**

(12) **EUROPÄISCHE PATENTANMELDUNG**

(21) Anmeldenummer: 86107604.0

(22) Anmeldetag: 04.06.86

(51) Int. Cl.⁴: **G 01 N 30/82**
**G 01 N 35/02**

(30) Priorität: 04.06.85 DE 3520055

(43) Veröffentlichungstag der Anmeldung:
10.12.86 Patentblatt 86/50

(84) Benannte Vertragsstaaten:
AT BE CH DE FR GB IT LI LU NL SE

(71) Anmelder: Max-Planck-Gesellschaft zur Förderung der
Wissenschaften e.v.
Bunsenstrasse 10
D-3400 Göttingen(DE)

(72) Erfinder: Pauli, Josef
Hebelstrasse 18
D-6901 Eppelheim(DE)

(72) Erfinder: Kronwald, Klaus
Brückenstrasse 48
D-6920 Sinsheim(DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Möhlstrasse 22
D-8000 München 80(DE)

(54) Fraktionssammler.

(57) Es wird ein Fraktionssammler vorgeschalgen, bei dem
die Relativbewegung des Auslaufs der Fraktionierungssäule
und der Fraktionsaufnahmegefäße durch pneumatische
Antriebs-, Feststell- und Steuermittel veränderbar ist.

FIG.1

0204329

Die Erfindung betrifft einen Fraktionssammler, umfassend eine Fraktionierungssäule mit Auslauf und
einen Träger mit einer Mehrzahl von Aufnahmestellen
für Fraktionsaufnahmegefäße, eine Antriebs- und
Feststellvorrichtung für den Antrieb bzw. die Feststellung des Auslaufs und des Trägers relativ zueinander in Feststellpositionen, in denen jeweils
ein Fraktionsaufnahmegefäß in Flucht mit dem Auslauf ist, und eine Steuereinrichtung für die Antriebs-
und Feststellvorrichtung.

Ein solcher Fraktionssammler ist aus dem Katalog
"Labomatic" der Firma Labomatic GmbH, 6920 Sinsheim,
BRD, vom Oktober 1983 bekannt. Es wird in dem Katalog auf die Seiten 34 bis 42 verwiesen.

Die bekannten Fraktionssammler sind elektrifiziert
und insbesondere mit elektrischen Antrieben ausgeführt, um den Träger mit den Fraktionsaufnahmegefäßen relativ zu dem Auslauf der Fraktionierungssäule
zu bewegen. In der Fraktionierungssäule werden lösungsmittelhaltige Substanzgemische verarbeitet.
In der analytischen und in der präparativen Chemie,
insbesondere in der präparativen Hochleistungs- und
Mitteldruckchromatographie werden zunehmend größere
Chargen verarbeitet, die in Fraktionssammlern gesammelt werden. Dabei entstehen aus den zur Anwendung kommenden aggressiven Lösungsmitteln in zunehmendem Maße Dämpfe.

Es wurde nun erkannt, daß die elektrischen Antriebs-
und Feststellvorrichtungen sowie die zugehörigen
Steuereinrichtungen von Fraktionssammlern eine Explosionsgefahr hervorrufen können, wenn in den
Fraktionssammlern mit zunehmend größeren Chargen
gearbeitet wird.

Erfindungsgemäß wird deswegen vorgeschlagen, daß
die Antriebs- und Feststellvorrichtung und die
Steuereinrichtung - letztere jedenfalls insoweit,
als sie am Orte des Fraktionssammlers angeordnet
ist - ausschließlich pneumatische Kraftgeräte und
Schaltelemente umfassen. Damit ist die Explosionsgefahr gebannt.

Die Antriebs- und Feststellvorrichtung und die Steuereinrichtung können zu einer Antriebs-, Feststell-
und Steuereinheit zusammengefaßt sein, die als äusseren Energieversorgungsanschluß lediglich einen
Druckluftversorgungsanschluß aufweist. Die Energieversorgung der Steuereinrichtung wird dabei von der
Druckluftversorgung abgeleitet. Sämtliche Schaltelemente der Steuereinrichtung, wie Drosselventile,
Langzeittimer, Zählwerke und dergleichen, sind pneumatisch ausgeführt und werden am Orte der Antriebs-,
Festell- und Steuereinheit durch Handeinstellung an
das jeweilige Programm angepaßt.

Alternativ ist es aber auch möglich, lediglich die
Antriebs- und Feststellvorrichtung am Orte des
Fraktionssammlers anzuordnen und diese Antriebs-und Feststellvorrichtung von einem entfernten, explosionsungefährdeten Ort aus über eine oder mehrere pneumatische Steuerleitungen anzusteuern. Beispielsweise kann man über eine einzige pneumatische
Steuerleitung durch einen Impulsfolgecode die einzelnen Steuersignale für die Antriebs- und Feststellvorrichtung übertragen.

Um einen kompakten, gegen Beschädigung geschützten
Aufbau des Fraktionssammlers zu erhalten, ist es
möglich, daß die Antriebs- und Feststellvorrichtung
sowie ggfs. die Steuereinrichtung im wesentlichen
in einem Gehäsue gekapselt sind.

Das die Antriebs- und Feststellvorrichtung sowie
ggfs. die Steuereinrichtung einschließende Gehäuse
kann gleichzeitig die Basis für den Träger der Fraktionsaufnahmegefäße und ggfs. auch die Fraktionierungssäule sein.

Die Antriebs- und Feststellvorrichtung ist nach einer
bevorzugten Ausführungsform mit einem pneumatischen
Schrittschaltzylidner ausgeführt, wobei zwischen dem
Schrittschaltzylinder und dem jeweils zu bewegenden
Teil eine pneumatische Mitnahmekupplung vorgesehen
sein kann. Auch die pneumatische Mitnahmekupplung
kann ggfs. durch ein Klinkenschaltwerk ersetzt werden. Der Schrittschaltzylidner kann so ausgebildet
sein, daß er nur in einer Bewegungsrichtung eine
schrittweise Relativbewegung zwischen dem Träger
und dem Auslauf bewirkt und daß er andererseits die Rückstellbewegung mit einem einzigen größeren Hub
durchführt. Es ist aber auch möglich, daß die Rückstellbewegung schrittweise erfolgt.

Wenn eine unbeabsichtigte Relativbewegung von Auslauf
und Träger der Fraktionsaufnahmegefäße zu befürchten
ist, so kann die Antriebs- und Feststellvorrichtung
zusätzlich mit einem pneumatischen Feststellzylinder
ausgeführt werden.

Um eine exakte Fortschaltung und ggfs. Fixierung zu
gewährleisten, ist es möglich, daß die pneumatisch
betätigte Mitnahmekupplung und/oder der pneumatische
Feststellzylidner mit Teilungsrasten an dem jeweils
zu bewegenden Teil zusammenwirken.

Im Hinblick auf vielseitige Programmierungsmöglichkeiten ist es vorteilhaft, wenn der pneumatische
Schrittschaltzylidner ein doppelseitig beaufschlagter
Zylinder ist. Dagegen genügt es, wenn die pneumatisch
betätigte Mitnahmekupplung und der pneumatische Feststellzylidner jeweils nur einseitig druckluftbeaufschlagt und im übrigen federvorgespannt sind.

Um den Programmablauf der Steuereinrichtung mit den
jeweils ausgeführten Bewegungsvorgängen zu synchronisieren, empfiehlt es sich, den pneumatischen Schrittschaltzylidner mit einem pneumatischen Endschalter an
mindestens einem Ende seines Hubs zusammenwirken zu
lassen.

- 6 -                    0204329

Der erfindungsgemäße Fraktionssammler ist wahlweise an
ein Druckluftnetz oder eine Druckluftflasche anschließbar. Für den Anschluß an eine Druckluftflasche ist er
insbesondere dann geeignet, wenn die Steuereinrichtung
mit der Antriebs- und Feststellvorrichtung zusammengefaßt ist.

Der erfindungsgemäße Fraktionssammler kann mechanisch
auf unterschiedlichste Weise aufgebaut sein:

a) Rotierbarer Träger für die Fraktionsaufnahmegefäße und stationärer Auslauf
   der Fraktionierungssäule;

b) feststehender Träger mit Fraktionsaufnahmegefäßen und rotierbarer Auslauf
   der Fraktionierungssäule;

c) in beiden Fällen a) und b) können die
   Fraktionsaufnahmegefäße wahlweise in
   einem oder mehreren konzentrischen Kränzen
   auf dem Träger angeordnet sein;

d) Anordnung der Fraktionsaufnahmegefäße
   auf einer durch eine Kette oder einen
   Riemen gebildeten Schleife;

e) Anordnung der Fraktionsaufnahmegefäße
   auf einem linear bewegten Träger und
   stationärer Auslauf oder umgekehrt;

f) Anordnung der Fraktionsaufnahmegefäße
   auf einem durch zwei Antriebe in zueinander senkrechten Richtungen beweglichen Träger gegenüber einem stationären Auslauf der Fraktionierungssäule
   oder umgekehrt;

g) bei f) sind die verschiedensten Relativbewegungsformen möglich, z.B. Zeilensprungbewegung, hin- und hergehende Zeilenbewegung, Mäanderbewegung.

Um während der Relativbewegung von Träger und Auslauf den Austritt von Flüssigkeit aus dem Auslauf
zu unterbrechen und nach Beendigung eines Fraktionierungsprogramms das Leerlaufen der Säule zu
verhindern, ist vorgesehen, daß am Auslauf der
Fraktionierungssäule ein pneumatisch betätigtes
Auslaufventil angeordnet ist.

Für den Fall beispielsweise, daß ein bestimmtes
Fraktionierungsprogramm mehrfach hintereinander
ablaufen soll, beispielsweise mit gleichbleibenden, nach und nach in den einzelnen Programmwiederholungen befüllten Fraktionsaufnahmegefäßen, ist
vorgesehen, daß in einer Verbindungsleitung zwischen einem Vorratsgefäß der zu fraktionierenden
Substanz und der Fraktionierungssäule ein pneumatisch betätigtes Zulaufventil (Probenaufgabeventil) angeordnet ist.

Um zu verhindern, daß bei Netzzusammenbruch des
Druckluftversorgungsnetzes und/oder Erschöpfung
einer Druckluftvorratsflasche Flüssigkeit aus der
Fraktionierungssäule und/oder dem Vorratsgefäß
ausläuft, ist vorgesehen, daß das Auslauf- und/oder
Zulaufventil durch Federkraft in Schließstellung
vorgespannt und durch Druckluftbeaufschlagung zu
öffnen sind.

Um sicherzustellen, daß keine aggressiven Lösungsmitteldämpfe Zutritt zu den empfindlichen Teilen
der Antriebs- und Feststellvorrichtung sowie ggfs.
der Steuereinrichtung erhalten, ist vorgesehen,
daß das Gehäuse mit Mitteln zur Aufrechterhaltung
eines pneumatischen Überdrucks gegenüber der Atmosphäre ausgerüstet ist.

Für den Fall besonders aggressiver oder in besonders
großem Umfang anfallender Lösungsmitteldämpfe ist
vorgesehen, daß der Träger mit den Fraktionsaufnahmegefäßen von einer Glocke aufgenommen ist. Auf
diese Weise können die Dämpfe aufgefangen werden.
Insbesondere ist es dabei möglich, daß die Lösungsmitteldämpfe abgesaugt und aufgearbeitet, beispielsweise rekondensiert werden.

Für den Aufbau der Schalteinrichtung gibt es viele
Möglichkeiten. Wesentlich ist, daß unterschiedliche
Programme wählbar sind, um der Zahl der Fraktionsaufnahmegefäße, der geometrischen Anordnung der
Fraktionsaufnahmegefäße (z.B. in einem Kranz oder

0204329

in mehreren Kränzen), der Größe der Fraktionsaufnahmegefäße (unterschiedliche Verweilzeit), der
Wiederholung bestimmter Teilprogramme usw. Rechnung tragen zu können. Es ist auch denkbar, daß
man unterschiedliche Grundprogramme wählen kann,
die beispielsweise unterschiedlichen Geometrien
der Gefäßanordnung auf dem Träger entsprechen, und
daß man innerhalb dieser Grundprogramme dann Abwandlungen vornehmen kann durch Einstellung der
Zahl der Bewegungsschritte und/oder der Verweilzeit.

Die beiliegenden Figuren erläutern die Erfindung
anhand eines Ausführungsbeispiels. Es stellen dar:

Figur 1 eine erste Ausführungsform eines
        Fraktionssammlers;

Figur 2 ein schematisches Schaltbild der pneu-
        matischen Einrichtungen zu dem Frak-
        tionssammler nach Figur 1;

Figur 3 eine zweite Ausführungsform eines
        Fraktionssammlers;

Figur 4 eine dritte Ausführungsform eines
        Fraktionssammlers.

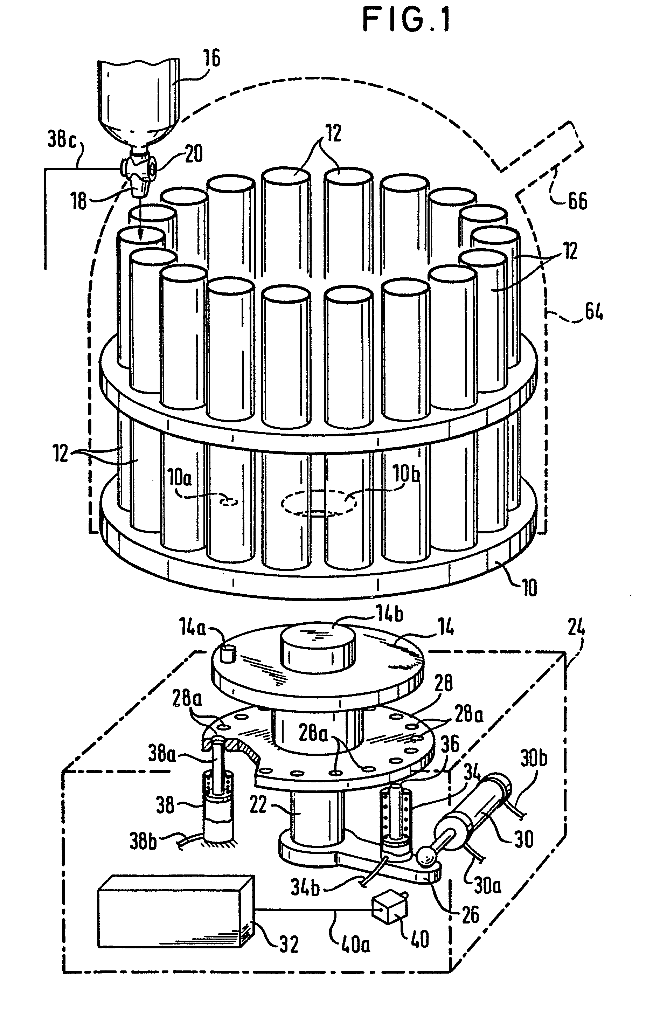

In Figur 1 erkennt man eine Trägerplatte 10 zur Aufnahme eines Kranzes von Fraktionsaufnahmegefäßen 12.
Die Trägerplatte 10 ist auf einen Trägerflansch 14
aufsetzbar, der eine Mitnehmerklaue 14a zum Eingriff
in ein Mitnehmerloch 10a der Trägerplatte 10 trägt.
Ein Zentrierfortsatz 14b des Trägerflansches 14
greift in ein Zentrierloch 10b der Trägerplatte 10
ein. Stationär gegenüber der Trägerplatte 10 erkennt
man eine Fraktionierungssäule 16 mit einem Auslauf
18 und einemAuslaufventil 20.Der Trägerflansch 14
sitzt auf einer Welle 22, die in einem Gehäsue 24
oder in einem innerhalb des Gehäuses 24 untergebrachten Rahmen gelagert ist. Die Welle 22 trägt einen
Antriebsarm 26 und eine Verrastungsscheibe 28. An
dem Antriebsarm 26 greift ein doppelt wirkender
pneumatischer Schrittschaltzylinder 30 an, der von
einer Steuereinrichtung 32 her mit Druckluft beschickt wird. Auf dem Mitnehmerarm 26 sitzt eine Mitnahmekupplung 34 in Form eines einseitig druckluftbeaufschlagten, in die Entkupplungsstellung vorgespannten pneumatischen Zylinders, dessen Kolbenstange 36 zum Eingriff in Teilungsrasten 28a der
Verrastungsscheibe 28 bestimmt ist. Stationär innerhalb des Gehäuses 24 ist ein pneumatischer Feststellzylinder 38 angeordnet, dessen Kolbenstange 38a ebenfalls zum Eingriff in die Teilungsrasten 28a bestimmt
ist. Die Fortschaltung erfolgt in der Weise, daß,
ausgehend von einer bestimmten Einstellung, beispielsweise einer Grundstellung gemäß Figur 1, zunächst
die Kolbenstange 36 der Mitnahmekupplung 34 in eine

mit ihr fluchtende Teilungsraste 28a eingefahren wird,
dann die Kolbenstange 38a aus der zugehörigen Teilungsraste zurückgezogen wird und dann der Schrittschaltzylidner 30 einen Hub ausführt, der einem Teilungsrastenabstand oder einem Vielfachen eines Teilungsrastenabstands entspricht. Nach Beendigung dieses Hubs meldet ein pneumatischer Endschalter 40 an
die Steuereinrichtung 32, daß ein Schaltschritt ausgeführt ist. Damit beginnt nun eine bestimmte Verweilzeit, innerhalb der Flüssigkeit aus der Fraktionierungssäule 16 in ein bestimmtes Fraktionsaufnahmegefäß 12 einlaufen kann. Das Auslaufventil 20 ist
von der Steuereinrichtung 32 her so gesteuert, daß
es nur dann gegen Federdruck öffnet, wenn der Auslauf 18 in Fluchtstellung zu einem der Fraktionsaufnahmegefäße 12 ist.

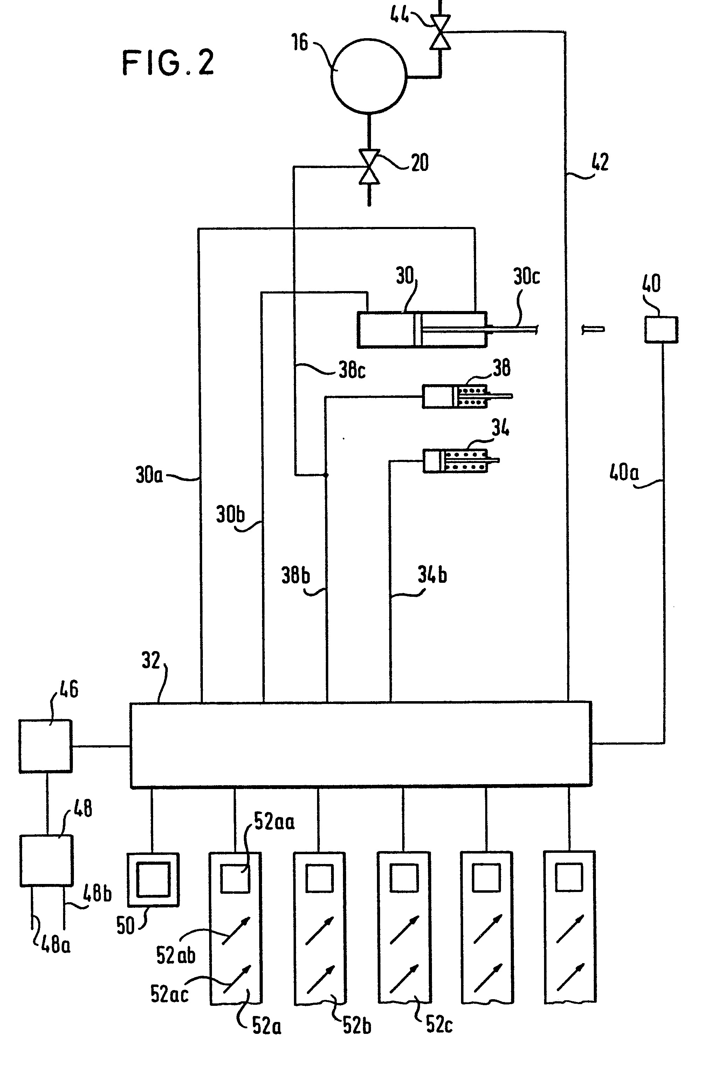

In Figur 2 erkennt man eine schematische Darstellung
einer pneumatischen Schaltung. Man erkennt dort wieder
die Steuereinrichtung 32, von der zwei Leitungen 30a
und 30b zu dem pneumatischen Schrittschaltzylinder 30,
eine Leitung 38b zu dem pneumatischen Feststellzylinder 38 und eine Leitung 34b zu der Mitnahmekupplung
34 führen. Eine Zweigleitung 38c führt von der Leitung 38b zu dem Auslaufventil 20, so daß dieses dann
und nur dann öffnet, wenn der Feststellzylidner 38
beaufschlagt und damit der Trägerflansch 14 mit der
Trägerplatte 10 in einer Stellung arretiert ist, in
der der Auslauf 18 in Flucht mit einem der Fraktionsaufnahmegefäße 12 ist. Die Kolbenstange 30c des
Schrittschaltzylinders 30 wirkt auf den Endschalter 40 ein und der Endschalter liefert über eine Leitung 40a
ein Signal zurück an die Steuereinrichtung 32. Die
Steuereinrichtung 32 ist ferner über eine Leitung 42
mit einem Zulaufventil 44 verbunden, das die Fraktionierungssäule 16 mit einem Vorratsbehälter verbindet, so daß zu gegebener Zeit die Fraktionierungssäule, gesteuert durch die Steuereinrichtung 32, neu
aufgefüllt werden kann.

Die Steuereinrichtung ist mit einem Filter 46 und
einem Druckregler 48 ausgerüstet, die zu einer Baueinheit zusammengefaßt sein können. Der Druckregler
48 weist zwei Anschlüsse 48a und 48b für den Netzanschluß bzw. den Anschluß einer Druckluftflasche
auf. Mit der Steuereinrichtung 32 sind ein Hauptschalter 50 und verschiedene Programmeinheiten 52a,
52b, 52c usw. verbunden. Jede dieser Programmeinheiten weist einen Grundwahlschalter 52aa, ein Einstellglied 52ab für einen Langzeittimer und ein
Einstellglied 52ac für einen Schrittzähler auf.

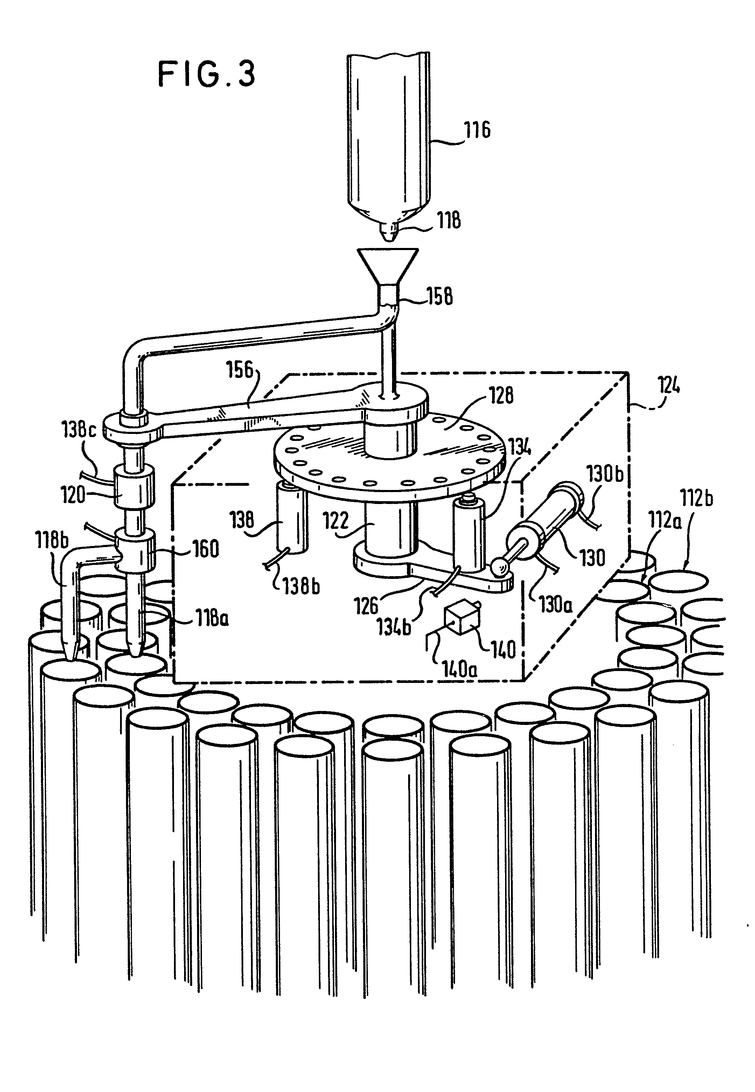

In Figur 3 ist eine abgewandelte Ausführungsform zu
Figur 1 dargestellt. Analoge Teile sind mit gleichen
Bezugzeichen versehen, jeweils vermehrt um die
Zahl 100. In dieser Ausführungsform sind die Fraktionsaufnahmegefäße stationär angeordnet, und zwar
sind zwei Kränze 112a und 112b von stationären Fraktionsaufnahmegefäßen konzentrisch um die Achse der
Welle 122 angeordnet. Auf der Welle 122 sitzt ein
Verstellarm 156, der in der gleichen Weise angetrieben und festgestellt wird wie in der Ausführungsform nach Figur 1 der Trägerflansch 14. Dieser Verstellarm 156 verstellt ein gekröpftes Auslaufrohr
158 der Fraktionierungssäule 116 schrittweise. An
dem Auslaufrohr 158 sitzt das Auslaufventil 138c
und ein Verzweigungsventil 160, welches das Auslaufrohr 158 wahlweise mit einem Auslauf 118a und
einem Auslauf 118b verbindet.

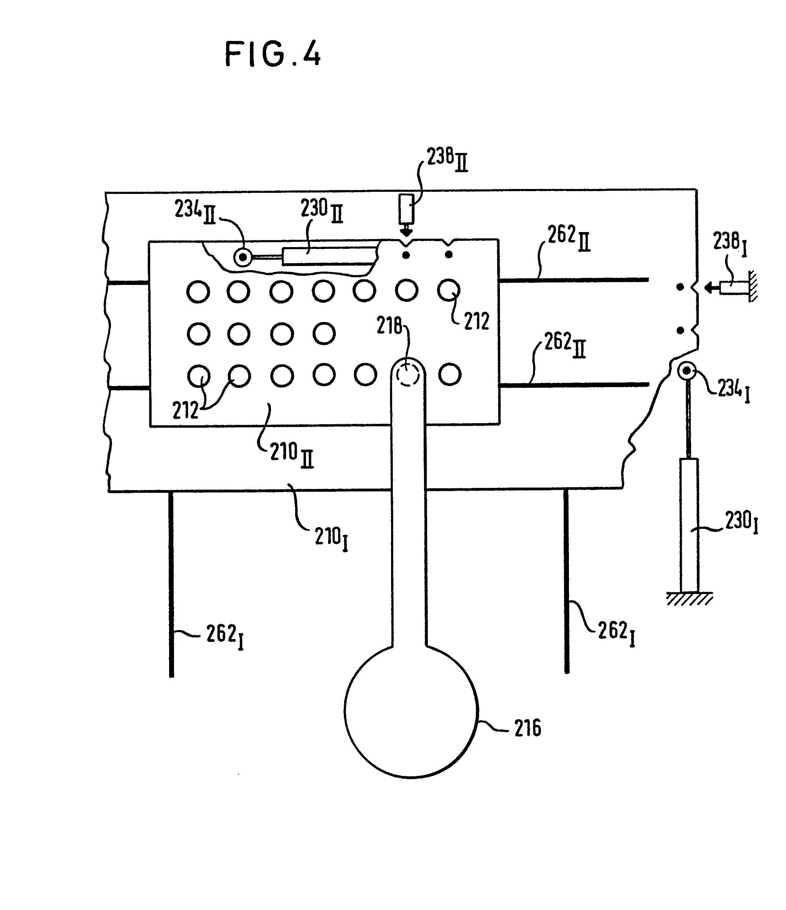

In Figur 4 ist eine weitere Ausführungsform dargestellt. Analoge Teile sind mit gleichen Bezugszeichen versehen wie in Figur 1, jeweils vermehrt um
die Zahl 200. Ein Grundtisch $210_I$ ist längs Schienen $262_I$ verschiebbar und zwar vermittels eines
Schrittschaltzylidners $230_I$. Die zugehörige Mitnahmekupplung ist mit $234_I$ und der zugehörige Feststellzylinder mit $238_I$ bezeichnet.

Ein Trägertisch $210_{II}$ ist auf dem Grundtisch längs
Schienen $262_{II}$ verfahrbar und zwar mittels eines
Schrittschaltzylinders $230_{II}$, dem eine Mitnahmekupplung $234_{II}$ und ein Feststellzylinder $238_{II}$ zugeordnet sind. Auf dem Trägertisch $210_{II}$ ist ein Feld von
Fraktionsaufnahmegefäßen 212 angeordnet. Von einer
stationär angeordneten Fraktionierungssäule 261 führt
ein Arm zu einem Auslauf 218.

Das Gehäuse 24 in Figur 1 ist so weitgehend abgedichtet, daß darin ein überatmosphärischer Luftdruck
aufrechterhalten werden kann. Auf diese Weise ist
sichergestellt, daß durch die verbleibenden Öffnungen stets Luft nach außen strömt und keine Lösungsmitteldämpfe in das Innere des Gehäuses 24 eindringen
können.

Wie aus Figur 1 weiter zu ersehen, ist die Trägerplatte 10 mit den Fraktionsaufnahmegefäßen 12 von
einer Glocke 64 eingeschlossen, an die eine Absaugleitung 66 anschließt. Die Absaugleitung 66 führt
zu einem Wiederaufbereitungsgerät, in welchem die
aufgefangenen Lösungsmitteldämpfe rekondensiert und
ggfs. voneinander getrennt werden.

Programmbeispiel 1:

Es wird in Figur 2 das Programm 52a gewählt. Bei
52ab wird die Verweilzeit des Langzeittimers zu
30 Minuten eingestellt. Bei 52ac wird das Zählwerk auf
20 Schaltschritte eingestellt. Danach läuft das Programm wie folgt ab: Wenn der Hauptschalter 50 betätigt wird, beginnt der Auslauf bei 18, indem das
Auslaufventil 20 geöffnet wird. Dieser Auslauf
dauert 30 Minuten. Nach 30 Minuten wird die Mitnahmekupplung 34 aktiviert, so daß deren Kolbenstange 36
in eine Teilungsraste 28a einfährt. Dann wird die
Kolbenstange 38a aus ihrer zugehörigen Teilungsraste
28a zurückgezogen und gleichzeitig das Auslaufventil
20 geschlossen. Dann wird der Schrittschaltzylinder
30 aktiviert und dreht den Antriebsarm 26 um einen
Schaltschritt weiter. Der Schrittschaltzylinder
30 kommt zum Stillstand, wenn der pneumatische Endschalter 40 beaufschlagt wird. Dann tritt die Kolbenstange 38a in eine neue Teilungsraste 28a ein und
die Kolbenstange 36 tritt dann aus ihrer Teilungsraste 28a wieder aus. Mit dem Eintritt der Kolbenstange 38a in die neue Teilungsraste wird auch das
Auslaufventil 20 wieder geöffnet, so daß das nächste Fraktionsaufnahmegefäß gefüllt wird. Dies setzt sich fort, bis alle durch Einstellung des Zählwerks bestimmten Fraktionsaufnahmegefäße 12 an die Reihe gekommen sind. Dann wird das Auslaufventil 20 geschlossen und der Schrittschaltzylinder 30 dreht die Welle entweder schrittweise oder auf einmal in die Ausgangsstellung zurück.

Programmbeispiel 2:

Ausgehend von dem ersten Programmbeispiel ist vorgesehen, daß nach Durchlaufen der in dem Zählwerk vorgesehenen Schaltschritte die Fraktionierungssäule 16 durch das Zulaufventil 44 neu befüllt wird und daß nach Rückkehr der Trägerplatte 10 in die Ausgangsstellung ein neuer Fraktionierungszyklus beginnt, der sich ggfs. mehrfach wiederholen kann.

Programmbeispiel 3:

Im Falle der Ausführungsform nach Figur 3 können innerhalb eines Fraktionierungszyklus zunächst die Fraktionsaufnahmegefäße 112a des inneren Kranzes und dann beim Rücklauf oder nach einem 360°-Durchlauf die Fraktionsaufnahmegefäße 112b des äußeren Kranzes befüllt werden. Die Umschaltung erfolgt dabei durch Betätigung des Verzweigungsventils 160.

Ähnliche Programme stehen für eine Ausführungsform gemäß Figur 4 zur Verfügung, wobei das Feld von Fraktionsaufnahmegefäßen 212 im Zeilensprungverfahren, mäanderförmig oder nach beliebig programmierbaren anderen geometrischen Mustern abgefahren werden kann.

Bei der Ausführungsform nach Figur 1 ist eine einfache Programmumstellung auch in der Weise denkbar, daß der pneumatische Endschalter 40 versetzbar ist und beispielsweise in einer ersten Stellung dem vollen Hub des Schrittschaltzylinders 30 entspricht und in einer oder mehreren weiteren Stellungen jeweils einem Bruchteil des Hubs des Schrittschaltzylinders, so daß wahlweise z.B. vier Teilungsschritte (entsprechend dem vollen Hub des Schrittschaltzylinders) oder zwei Teilungsschritte (entsprechend dem halben Hub des Schrittschaltzylinders) oder ein Teilungsschritt( entsprechend einem Viertel des Hubs des Schrittschaltzylinders) durchlaufen werden können.

Es ist zu beachten, daß der Feststellzylinder 38 in Figur 1 dann entfallen kann, wenn eine ausreichende Feststellung allein durch die innere Reibung des Getriebes gewährleistet ist. Dies gilt auch für die anderen Ausführungsformen.

Schließlich kann auch auf die pneumatische Mitnahmekupplung verzichtet werden, wenn der Schrittschaltzylinder mit einem Schaltklinkenmechanismus zusammenwirkt.

Zum Auslaufventil 20 ist noch nachzutragen, daß dieses zweckmäßig eine von der Fraktionierungssäule getrennte Baueinheit ist, die an der Fraktionierungssäule lösbar angeschlossen ist. Dieses pneumatisch betätigte Auslaufventil kann in Reihe zu einem nicht eingezeichneten handbetätigten Ventil angeordnet sein.

Bei einer bevorzugten Ausführungsform läuft der Fraktionierungssäule 16 permanent eine Trägerflüssigkeit (Elnat) zu. Die zu untersuchende Substanz (Probe) wird in Abständen von beispielsweise jeweils 1 Stunde durch das Zulaufventil 44 zugeführt und wird dann jeweils durch das Elnat durch die Säule hindurchgedrückt.

Zur Ausbildung der Glocke 64 ist noch folgendes nachzutragen: Bei Fraktionsaufnahmegefäßen großen Volumens empfiehlt es sich, jeweils nur den Einlaufbereich der Fraktionsaufnahmegefäße mit einer Abdeckung zu versehen, die dicht an die Fraktionsaufnahmegefäße anschließt und die an die Absaugleitung 66 angeschlossen ist.

Zur Fig. 3 ist noch nachzutragen, daß das Auslaufrohr 158 mit einem Trichter ausgeführt ist, über welchem der Auslauf 118 endet.

0204329


Patentansprüche


1. Fraktionssammler,umfassend eine Fraktionierungssäule
   (16) mit Auslauf (18) und einen Träger(10) mit einer
   Mehrzahl von Aufnahmestellen für Fraktionsaufnahmegefäße (12), eine Antriebs- und Feststellvorrichtung
   (30, 34, 38) für den Antrieb bzw. die Feststellung
   des Auslaufs (18) und des Trägers(10) relativ zueinander in Feststellpositionen, in denen jeweils
   ein Fraktionsaufnahmegefäß (12) in Flucht mit dem
   Auslauf (18) ist, und eine Steuereinrichtung (32)
   für die Antriebs- und Feststellvorrichtung (30, 34, 38),
   dadurch gekennzeichnet, daß die Antriebs- und Feststellvorrichtung (30, 34, 38) und die Steuereinrichtung (32) - letztere jedenfalls insoweit, als sie
   am Orte des Fraktionssammlers angeordnet ist - ausschließlich pneumatische Kraftgeräte und Schaltelemente umfassen.


2. Fraktionssammler nach Anspruch 1, dadurch gekennzeichnet, daß die Antriebs- und Feststellvorrichtung (30,
   34, 38) und die Steuereinrichtung (32) zu einer Antriebs-, Feststell- und Steuereinheit zusammengefaßt
   sind, die als äußeren Energieversorgungsanschluß
   lediglich einen Druckluftversorgungsanschluß
   (48a, 48b) aufweist.


3. Fraktionssammler nach Anspruch 1, dadurch gekennzeichnet, daß die Antriebs- und Feststellvorrichtung (30, 34, 38) als äußeren Energieversorgungsanschluß einen Druckluftversorgungsanschluß (48a, 48b) aufweist und daß eine Steuereinrichtung örtlich getrennt von der Antriebs- und Feststellvorrichtung (30, 34, 38) vorgesehen und mit der Antriebs- und Feststellvorrichtung (30, 34, 38) durch mindestens eine pneumatische Steuerleitung verbunden ist.

4. Fraktionssammler nach Anspruch 2 oder 3, dadurch gekennzeichhet, daß die Antriebs- udn Feststellvorrichtung (30, 34, 38) sowie ggfs. die Steuereinrichtung (32) im wesentlichen in einem Gehäuse (24) eingekapselt sind.

5. Fraktionssammler nach Anspruch 4, dadurch gekennzeichnet, daß das Gehäsue (24) die Basis für den Träger (10) und/oder die Fraktionierungssäule (16) bildet.

6. Fraktionssammler nach einem der Ansprüche 1 bis 5, dadurch gekennzeichnet, daß die Antriebs- und Feststellvorrichtung (30, 34, 38) einen pneumatischen Schrittschaltzylidner (30) und zwischen dem Schrittschaltzylinder (30) und dem jeweils zu bewegenden Teil (10) eine pneumatisch betätigte Mitnahmekupplung (34) umfaßt.

7. Fraktionssammler nach einem der Ansprüche 1 bis 6, dadurch gekennzeichnet, daß die Antriebs- und Feststellvorrichtung (30, 34, 38) einen pneumatischen Feststellzylidner (38) umfaßt.

8. Fraktionssammler nach einem der Ansprüche 6 und 7,
dadurch gekennzeichnet, daß die pneumatisch betätigte Mitnahmekupplung (34) und/oder der pneumatische
Feststellzylidner (38) mit Teilungsrasten (28a)
an dem jeweils zu bewegenden Teil (10) zusammenwirken.

9. Fraktionssammler nach einem der Ansprüche 6 bis 8,
dadurch gekennzeichnet, daß der pneumatische Schrittschaltzylinder (30) ein doppelseitig beaufschlagter
Zylinder ist.

10. Fraktionssammler nach einem der Ansprüche 6 bis 9,
dadurch gekennzeichnet, daß die pneumatisch betätigte Mitnahmekupplung (34) einen gegen Federdruck verstellbaren, einseitig durckluftbeaufschlagten pneumatischen Zylinder umfaßt.

11. Fraktionssammler nach einem der Ansprüche 7 bis 10,
dadurch gekennzeichnet, daß der pneumatische Feststellzylinder (38) ein gegen Federdruck verstellbarer,
einseitig druckluftbeaufschlagter pneumatischer Zylidner ist.

12. Fraktionssammler nach einem der Ansprüche 6 bis 11,
dadurch gekennzeichnet, daß der pneumatische Schrittschaltzylinder (30) mit einem pneumatischen Endschalter (40) an mindestens einem Ende seines Hubs
zusammenwirkt.

13. Fraktionssammler nach einem der Ansprüche 1 bis 12, dadurch gekennzeichnet, daß er wahlweise an ein Druckluftnetz (bei 48a) oder an eine Druckluftflasche (bei 48b) anschließbar ist.

14. Fraktionssammler nach einem der Ansprüche 1 bis 13, dadurch gekennzeichnet, daß er mit einem Luftfilter (46) und/oder einem Luftdruckregler (48) ggfs. zu einer Baueinheit zusammengefaßt ausgeführt ist.

15. Fraktionssammler nach einem der Ansprüche 6 bis 14, dadurch gekennzeichnet, daß der pneumatische Schrittschaltzylinder (30) auf einen schwenkbaren Schwenkarm (26) einwirkt und daß auf diesem Schwenkarm (26) die Mitnahmekupplung (34) angeordnet ist.

16. Fraktionssammler nach einem der Ansprüche 1 bis 15, dadurch gekennzeichnet, daß am Auslauf (18) der Fraktionierungssäule (16) ein pneumatisch betätigtes Auslaufventil (20) angeordnet ist.

17. Fraktionssammler nach einem der Ansprüche 1 bis 16, dadurch gekennzeichnet, daß in einer Verbindungsleitung zwischen einem Vorratsgefäß der zu fraktionierenden Substanz und der Fraktionierungssäule (16) ein pneumatisch betätigtes Zulaufventil (44) angeordnet ist.

18. Fraktionssammler nach Anspruch 16 oder 17, dadurch gekennzeichnet, daß das Auslaufventil (20) und/oder das Zulaufventil (44) durch Federkraft in Schließstellung vorgespannt und durch Druckluftbeaufschlagung zu öffnen sind.

19. Fraktionssammler nach einem der Ansprüche 4 bis 18, dadurch gekennzeichnet, daß das Gehäuse (24) mit Mitteln zur Aufrechterhaltung eines pneumatischen Überdrucks gegenüber der Atmosphäre ausgerüstet ist.

20. Fraktionssammler nach einem der Ansprüche 1 bis 19, dadurch gekennzeichnet, daß der Träger (10) mit den Fraktionsaufnahmegefäßen (12) von einer Glocke (64) aufgenommen ist.

21. Fraktionssammler nach einem der Ansprüche 1 bis 20, dadurch gekennzeichnet, daß die Glocke (64) an eine Dampfabsaugvorrichtung (66) angeschlossen ist.

22. Fraktionssammler nach einem der Ansprüche 1 bis 21, dadurch gekennzeichnet, daß die Steuereinrichtung (32) auf verschiedene Programme (52a, 52b usw) schaltbar ist.

23. Fraktionssammler nach einem der Ansprüche 1 bis 22, dadurch gekennzeichnet, daß die Verweilzeit des Auslaufs (18) und des Trägers (10) in den relativen Feststellpositionen wählbar ist.

24. Fraktionssammler nach einem der Ansprüche 1 bis 23, dadurch gekennzeichnet, daß die Zahl der relativen Bewegungsschritte zwischen Auslauf (18) und Träger (10) wählbar ist.

- 1/4 -

0204329

FIG.1

FIG.2

FIG.3

FIG.4